# EUROPÄISCHE PATENTSCHRIFT

(11) **EP 0 806 324 B1**
(45) Veröffentlichungstag und Bekanntmachung des Hinweises auf die Patenterteilung: **10.09.2003**
(21) Anmeldenummer: 97103217.2
(22) Anmeldetag: 27.02.1997
(51) Int. Cl.: B60R 21/02, B60J 5/04

(54) **Kraftfahrzeugtür mit Seitenaufprallschutz**
Motor vehicle door with side impact protection
Porte de véhicule automobile comportant un dispositif de protection en cas de choc latéral

(30) Priorität: 06.05.1996 DE 19618190
(43) Veröffentlichungstag der Anmeldung: 12.11.1997
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE); Wohllebe, Thomas, Dipl.-Ing., 38110 Braunschweig (DE); Herzberg, Dirk, 38446 Wolfsburg (DE); Dolla, Franz, Dipl.-Ing., 38550 Isenbüttel (DE); Wegener, Raimer, Dipl.-Ing., 38373 Frellstedt (DE)

(56) Entgegenhaltungen:
- EP-A- 0 530 042
- DE-A- 2 426 705
- DE-A- 3 919 742
- US-A- 5 171 058
- US-A- 5 466 031
- US-A- 5 553 910

## Beschreibung

Die Erfindung bezieht sich auf eine Kraftfahrzeugtür nach dem Oberbegriff des Patentanspruchs 1.

Eine solche Kraftfahrzeugtür ist aus der DE 195 27 333 A1 bekannt. Vorteil einer derartigen Kraftfahr-zeugtür ist, daß bei einem Frontal- oder Offsetcrash der sich in Fahrzeuglängsrichtung erstreckende und in der Regel als hohler Träger ausgebildete Auf-prallschutz nicht kollabiert und für Fahrzeuginsassen die Aufprallbedingungen während eines Seitencrashs verbessert werden, ohne daß die Fahrgastraumbreite merklich verringert werden muß. Dazu ist ein Hohlträger auf der Fahrzeuginsassenseite verformungsweich ausgebildet. Der in Längsrichtung steife und stabile Hohlträger wirkt in Fahrzeugquerrichtung also wie ein Deformationselement.

Weitere Kraftfahrzeugtüren sind aus der DE 39 19 742 A1 und der DE 24 26 705 A1 bekannt.

Der Erfindung liegt die Aufgabe zugrunde, an einer Kraftfahrzeugtür eine für Fahrzeuginsassen vorteilhafte Kraft-Weg-Kennung für einen Seitenaufprall gut reproduzierbar einzustellen.

Diese Aufgabe wird durch eine Kraftfahrzeugtür nach dem Patentanspruch 1 gelöst. Vorteilhafte Ausgestaltungen sind in den Patentansprüchen angegeben.

Gemäß der Erfindung werden bei einem Trägerelement pralltopfförmige Einsätze zwischen der Anprallwand und der Hinterwand beispielsweise in Höhe der Türbrüstung vorgesehen. Diese können entweder bei bestehenden Fahrzeugkonzepten in das Trägerelement hineinverlegt werden oder bei Anbindung an eine als Anprallwand vorgesehene Platte auf bereits vorhandene Trägerelemente aufgelegt werden. Ein geschlossenes Trägerelement-Hohlprofil wäre an wenigstens einer Stelle zu öffnen oder zu schwächen, damit eine Verlagerung der Anprallwand in Richtung auf die Hinterwand stattfinden kann. Vorstellbar ist in diesem Sinne die Einprägung einer Sollbruch- oder Sollknickstelle, die nach Überschreitung eines vorgegebenen Kraftniveaus nachgibt und eine Bewegung der Anprallwand ermöglicht.

Über die Längsaus-dehnung des Trägerelementes hinweg können Pralltöpfe mit unterschiedlichen Kraft-Weg-Kennungen eingesetzt werden. Bezogen auf die Verhältnisse einer Kraftfahrzeugtür auf der Fahrerseite kann zum Beispiel für die der B-Säule zugeordneten Prall-töpfe eine härtere Kennung vorgesehen werden als für die weiter vom angeordneten Pralltöpfe im Bereich der sogenannten A-Säule. Diese unterschiedliche Auslegung der Kraft-Weg-Kennungen beruht auf der erfinderseitigen Erkenntnis, daß große und damit in der Regel auch schwerere Personen für eine wirkungsvolle Energieabsorption einer härteren Kennung ausgesetzt werden müssen als kleinere und damit in der Regel auch leichtere Personen, die ihrerseits wiederum zwangsläufig weiter vorn sitzen müssen, wenn das Fahr-zeug sicher bewegt werden soll.

Die erfindungsgemäße Lösung kann in Leichtbauweise ausgelegt werden. So wird beispielsweise die Anprallwand und/oder die Hinterwand als sogenanntes tailored-blank ausgeführt, bei dem den pralltopfartigen Einsätzen dünnere und damit auch leichtere Blech-partien zugeordnet werden. Zur Erzeugung einer ausreichenden Grundstabilität bleiben die nicht von den pralltopfartigen Einsätzen bedeckten Blechpartien hinsichtlich ihrer Blech-stärke gegenüber konventionell ausgeführten Trägerelementen unverändert. Die ebene Fläche des nach dem Tailored-blank-Verfahren hergestellten Blechverbundes wird der Außenseite des Trägerelementes zugeordnet, so daß die Blechdickensprünge äußerlich nicht weiter erkennbar und bei einem Seitenaufprall für den Insassen auch nicht spürbar sind.

Die erfindungsgemäßen Einsätze können entweder als kreisförmige oder rechteckförmige Einzelteile hergestellt werden oder integraler Bestandteil einer mit entsprechenden Ver-tiefungen versehenen Topfplatte sein.

Weiterhin ist es vorstellbar, ein Rohrprofil innen mit pralltopfartigen Deformationselementen abzustützen.

Insbesondere bei der Neukonzeption von Leichtbaufahrzeugen wird gemäß einer vorteilhaften Ausgestaltung der Erfindung das Trägerelement als Verbund aus einem Rohrprofil und einer Deformationsschale gebildet, die beide durch Strangpreßprofilierung erzeugt worden sind. Eine derartige Konfiguration ist besonders gut geeignet für die Verwendung von Aluminium-werkstoffen, weil die bei dieser Werkstoffart in der Regel recht aufwendigen Schweißar-beiten auf ein Minimum reduziert werden können.

Weiterhin kann das Trägerelement in an sich bekannter Weise als Schalenkörper ausgebildet sein. Die Verbindung der Schalenkörper wird jedoch so ausgeführt, daß sich ein Befestigungsabschnitt ergibt, der nach Beaufschlagung der Anprallwand energieverzehrende Relativbewegungen zwischen den Schalen ermöglicht.

Die Erfindung kann ohne großen Konstruktionsaufwand in bereits bestehende Fahrzeug-konzepte eingebunden werden.

Ziel der Erfindung ist in erster Linie nicht eine Beschränkung der Intrusion eines seitlich stoßenden Fahrzeuges, sondem die Minderung der Folgen der von der Kraftfahrzeugtür auf den Insassen ausgeübten Stoßbelastungen hinsichtlich ihrer Verletzungswirkung. Gleichwohl wird die Widerstandskraft der Kraftfahrzeugtür gegenüber der Eindringbewegung eines seitlich stoßenden Fahrzeugs nicht herabgesetzt.

Nachfolgend wird die Erfindung anhand von in der Zeichnung dargestellten Ausführungsbeispielen näher erläutert. Die Zeichnung zeigt in:
- Figur 1: eine Teilschnittansicht einer Kraftfahrzeugtür mit Seitenaufprallschutz ohne pralltopfartige Einsätze,
- Figur 2: eine perspektivische Darstellung eines Trägerelements ohne pralltopfartige Einsätze,
- Figur 3: eine Modifikation des in Figur 2 dargestellten Trägerelements,
- Figur 4: eine Teilschnittansicht eines Ausführungsbeispiels einer Kraftfahrzeugtür mit Seitenaufprallschutz nach der Erfindung mit pralltopfartigen Einsätzen,
- Figur 5: eine Draufsicht des Trägerelements aus Figur 4,
- Figur 6: eine Modifikation des in Figur 4 dargestellten Trägerelements in einer Schnittansicht,
- Figur 7: die Draufsicht auf einen in Figur 6 angedeuteten Pralltopf,
- Figur 8: einen aus einer Blechplatine hergestellten Pralltopfverbund,
- Figur 9: eine Modifikation des in Figur 8 gezeigten Pralltopfverbunds,
- Figur 10: eine Teilschnittansicht einer weiteren Kraftfahrzeugtür mit Seitenaufprallschutz ohne pralltopfartige Einsätze,
- Figur 11: eine andere Ansicht der in Figur 9 dargestellten Kraftfahrzeugtür, und in
- Figur 12: eine Modifikation der in Figur 9 dargestellten Kraftfahrzeugtür.

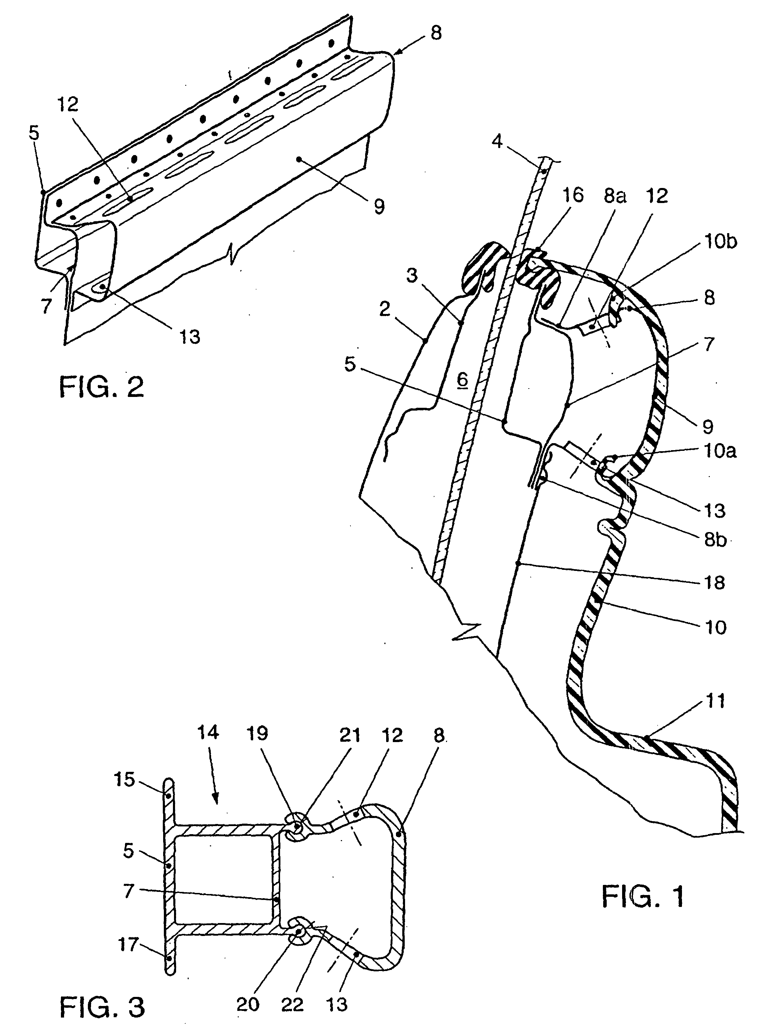

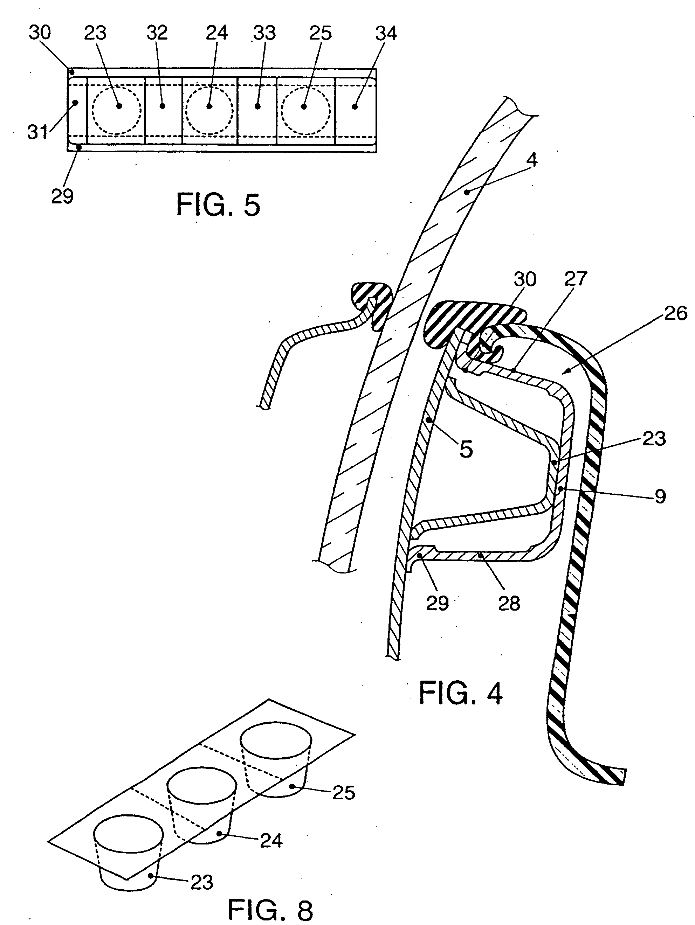

Gegenstände in Sinne der Erfindung sind die in den Figuren 4 bis 9 dargestellten Beispiele. Die Figuren 1 bis 3 sowie 10 bis 12 zeigen Türen, die selbst nicht Gegenstand der Erfindung sind. In diese können jedoch die erfindungsgemäßen pralltopfartigen Einsätze eingebaut werden.

Gleiche oder gleichartige Bauteile weisen in allen Figuren die gleiche, gegebenenfalls um einen Strich ergänzte Bezifferung auf.

Figur 1 zeigt in einem Vertikalschnitt eine Kraftfahrzeugtür mit Seitenaufprallschutz ohne pralltopfartige Einsätze. Von besonderer Bedeutung ist ein insgesamt mit 1 bezeichnetes Trägerelement, das in Höhe der Türbrüstung verläuft und hier integraler Bestandteil eines Türinnenrahmens ist. Zwischen einem Türaußenblech 2 und einer damit verbundenen Rahmenschale 3 verläuft eine ebenfalls nur ausschnittsweise dargestellte Fensterscheibe 4. Eine Hinterwand 5 des Trägerelementes 1 bildet zusammen mit der Blechschale 3 einen Fensterschacht 6, in der die Fensterscheibe 4 auf- und ab bewegbar ist. Wesentliche Elemente sind schließlich noch eine Zwischenwand 7 und eine Deformations-schale 8, die gemeinsam mit der Hinterwand 5 ein Trägerelement bilden, das einerseits bei einem Frontal- oder Offsetcrash nicht ausknickt und andererseits für einen Fahrzeuginsassen eine höchstmögliche Energieabsorption gewährleistet. Als Besonderheit ist hier der Deformationsschale 8 eine abgerundete Anprallwand 9 zugeordnet, die von einem geschäumten Verkleidungsteil 10 bedeckt ist. Dessen Breite und Materialzusammensetzung ist so bemessen, daß lediglich ein Kantenschutz und eine Dekorfunktion bereitgestellt wird. Beiträge zur Energieabsorption liefert das Verkleidungselement 10 nicht. Dieses ist hier konventionell ausgeführt und kann beispielsweise mit einer Ausbuchtung 11 versehen werden, um so eine Armlehne als integralen Bestandteil der Türverkleidung herauszubilden. Auch die Hinterwand 5 und die Zwischenwand 7 (siehe hierzu auch Figur 2) können Bestandteil eines konventionell ausgeführten Fensterschachtträgers sein. Die Deformationsschale 8 wird dann mittels abgestellter Flansche 8a, 8b lediglich durch Punkt-schweißung, Klebung und/oder Laserschweißung aufgesetzt. Der Energieabsorptionsbereich wird gebildet durch Langlöcher, von denen nur zwei stellvertretend für alle anderen mit 12 und 13 bezeichnet sind. Je nach gewünschter Kraft-Weg-Kennung können diese Aus-nehmungen mehr oder weniger groß ausgeführt werden.

Über die Längserstreckung des Trägerelementes 1 kann die Kennung variiert werden. Für weiter hinten sitzende Insassen, die größer und damit in der Regel auch schwerer sind, kann eine relativ harte Kennung vorgesehen werden. Die Ausnehmungen wären dann also bezogen auf die gesamte Ausdehnung der Deforma-tionsschale 8 relativ klein. In Fahrzeuglängsrichtung weiter vom könnten die Ausnehmungen dann größer sein, um so eine weichere Kennung für kleinere Insassen bereitzustellen. Außerdem sind hier die Langlöcher 12 und 13 als Haltemittel für das Verkleidungsteil 10 nutzbar. Zu diesem Zweck sind als Rastkörper an diesem Clipsnasen 10a, 10b angeformt oder befestigt, die in den Langlöchern 12, 13 arretierbar sind.

Die Deformationsschale 8 kann besonders kostengünstig gefertigt werden. So können bei-spielsweise auf eine ebene Platine zunächst die Lochungen eingebracht werden. Schließlich wird das auf diese Weise gelochte oder perforierte Blech so umgeformt, daß es direkt auf den aus Hinterwand 5 und Zwischenwand 7 gebildete Profilabschnitt aufgesetzt werden kann. Eine Zwischenwand 7 ist jedoch nicht zwangsläufig notwendig. Bei einer völligen Neukonzeption kann durch entsprechende Auslegung der Deformationsschale 8 gegebenenfalls auch auf die Zwischenwand 7 verzichtet werden.

Insbesondere im Hinblick auf den Bau von Leichtbaufahrzeugen kann ein Profil-aufbau in Betracht gezogen werden, wie er in Figur 3 dargestellt ist. Vorzugsweise durch Strangpreßprofilierung werden die Hinterwand 5 und die Zwischenwand 7 als Bestandteil eines hier insgesamt mit 14 bezeichneten Trägerprofils geformt. An diesem Rohrprofil mit Polygonquerschnitt sind an den Ecken einerseits ein Stehflansch 15 zur Befestigung eines Dichtelementes 16 (siehe auch Figur 1) sowie ein Stehflansch 17 zur Halterung eines Aggregateträgers 18 und andererseits Halteprofilstege 19, 20 angeformt, die mit kugelkopfförmigen Enden in Befestigungsnuten 21, 22 mit kalottenartigen Querschnitt einer ebenfalls durch Strangpreßprofilierung hergestellten Deformationsschale 8 eingreifen. Diese und das Bauteil 14 können zum gesamten Trägerelement durch einfaches Aufeinanderschieben zusammengebaut werden. Der bevorzugte Anwendungsfall für eine derartig gestaltete Kraftfahrzeugtür ist ein aus Aluminiumwerkstoffen gefertigtes Fahrzeug.

Die vorstehend erläuterte Konstruktion ist nicht auf die in Figuren 1 bis 3 dargestellten Ausführungs-formen beschränkt. So kann beispielsweise zur Einstellung bestimmter Kraft-Weg-Kennungen insbesondere im Hinblick auf die eingesetzten Werkstoffe auch eine Mischbau-weise realisiert werden. Vorstellbar wäre also dementsprechend auch eine aus Stahlblech geformte Deformationsschale 8, die auf einen aus Aluminium gefertigten Profilabschnitt 14 aufgesetzt wird. Die in der Zeichnung dargestellte Ω-Form ermöglicht die Vorgabe definierter Knickstellen. Davon abweichend können aber auch andere Querschnittsformen für die Deformationsschale 8 gewählt werden. Wichtig ist jedoch, daß insbesondere durch Abrun-dungen die Anprallwand 9 so geformt ist, daß im Falle einer Beaufschlagung durch den Insassen dieser keinen scharfen Kanten ausgesetzt wird.

Figur 4 zeigt ein Ausführungsbeispiel nach der Erfindung, bei dem die Energieabsorption durch prall-topfartige Einsätze 23 bis 25 (siehe hierzu auch Figuren 5 und 8) erfolgt. Diese befinden sich zwischen der Anprallwand 9 und der Hinterwand 5. Anders als bei der vorstehend erläuterten Konstruktion sind hier Energieabsorptionskörper in den sogenannten Fenster-schachtträger hineinverlegt. Dessen ursprüngliche räumliche Ausdehnung bleibt erhalten. Allerdings sind Änderungen an einem die Anprallwand 9 enthaltenden Schalenkörper 26 erforderlich. So sind im wesentlichen waagerecht verlaufende Wandungen 27, 28 des Schalenkörpers 26 mit gezielten Schwächungen versehen, damit in definierter Weise bei einer Beaufschlagung der Anprallwand 9 lediglich die pralltopfförmigen Einsätze 23 bis 25 die Kraft-Weg-Kennung maßgeblich bestimmen. Diese gezielten Schwächungen können durch Blechdickenreduzierungen, extrem große Lochungen, Sicken und/oder Stülpflansche gebildet sein.

Bei einer besonders vorteilhaften Ausgestaltungsform ist der Schalenkörper 26 nach Art eines sogenannten "tailored-blank" ausgebildet. Die den Sollschwachstellen und den prall-topfförmigen Einsätzen 23 bis 25 zugeordneten Blechbereiche sind dabei aus einer Dünnblech-Ausgangsplatine hergestellt. Demgegenüber werden zur Befestigung an der Hinterwand 5 vorgesehene Halteflansche 29, 30 und zwischen den Einsätzen 23 bis 25 verlaufende Überbrückungsbereiche 31 bis 34 dicker ausgeführt. Ein derartig ausgebildetes Trägerelement begünstigt neben der guten Einstellbarkeit der jeweils erforderlichen Kraft-Weg-Kennungen auch den Leichtbau von aus Stahl gefertigten Karossen.

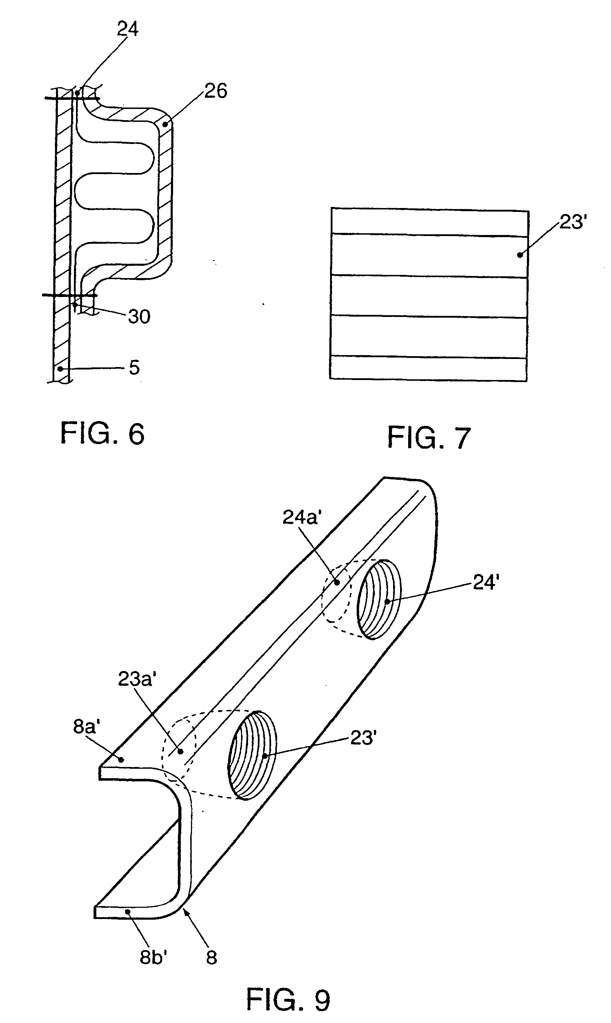

Ergänzend oder altemativ zu der in den Figuren 4 und 5 dargestellten Pralltopfgeometrie können auch andere Querschnitte vorgesehen werden. So zeigt beispielsweise Figur 6 einen Pralltopf, der im Querschnitt im wesentlichen mehr mäanderförmig ausgebildet und in der Draufsicht viereckig ist (siehe Figur 7). Der in Figur 7 gezeigte Einsatz 23' kann beispielsweise aus einem durch Rollprofilierung hergestellten Halbzeug gefertigt werden. Die Halteflansche 29, 30 können entweder - wie in Figur 4 gezeigt - ohne Einschluß des Einsatzes 23 auf die Hinterwand 5 aufgesetzt werden oder aber - wie in Figur 6 angedeutet - zusammen mit der Hinterwand 5 unter Einschluß des Einsatzes 23' vorzugsweise durch Verschweißung miteinander verbunden werden.

Die Einsätze 23 bis 25 können gemeinsam aus einer Blechplatine hergestellt sein. Diese kann zur Einstellung unterschiedlicher Kraft-Weg-Kennungen über die Länge des Trägerelementes als "Tailored-Blank" mit unterschiedlichen Blechdicken und/oder Werkstoffgüten ausgeführt sein. Weiter vorn angeordnete Pralltöpfe würden dementsprechend also mit einem dünneren und/oder weicheren Blech ausgeführt werden. Der gesamte in Figur 8 dargestellte Pralltopfverbund kann dann zunächst entweder an der Hinterwand 5 oder an dem Schalenkörper 26 im Rahmen eines Unterzusammenbaus festgelegt werden, bevor das gesamte Trägerelement zusammengefügt wird.

Das in Figur 9 dargestellte Ausführungsbeispiel zeigt Pralltöpfe 23', 24', die in die Deforma-tionsschale 8 eingeformt sind. Über Bodenbereiche 23a' und 24a' ist letztere beispielsweise auf der Zwischenwand 7 oder direkt an der Hinterwand 5 befestigt (siehe Figur 2), und zwar vorzugsweise durch einfache Punktschweißung. Je nach gewünschter Kraft-Weg-Kennung können frei Wangenenden 8a', 8b' der Deformationsschale 8 bezogen auf die Tiefe der Pralltöpfe gleich groß oder kleiner ausgeführt werden. Diesbezüglich variabel sind auch die Anstellwinkel der freien Wangenenden 8a', 8b'. In einer besonders bevorzugten Ausführung ist die Blechdicke der Deformationsschale überall annähernd gleich groß. Es gibt also keine Querschnittssprünge, die bei Offset-Belastungen zu Knickproblemen führen würden. Die gesamte Deformationsschale ist hier nach Art eines Trägers auf zwei Stützen (Pralltöpfe 23', 24') ausgeführt. Für Aufschlagpunkte, die zwischen den Pralltöpfen 23', 24' liegen, bedeutet dies, daß neben der Pralltopfverformung auch die Durchbiegung der Deforma-tionsschale 8 die Energieabsorption begünstigt und den Betrag der Aufprallhärte im Bereich der Türbrüstung herabsetzt.

Bestimmte Merkmale der Erfindung sind mit einer Konstruktion nach den Figuren 1 bis 3 kombinierbar. So können beispielsweise die Wandungen der pralltopfartigen Einsätze 23 bis 25 zur Einstellung unter-schiedlicher Kraft-Weg-Kennungen gelocht sein.

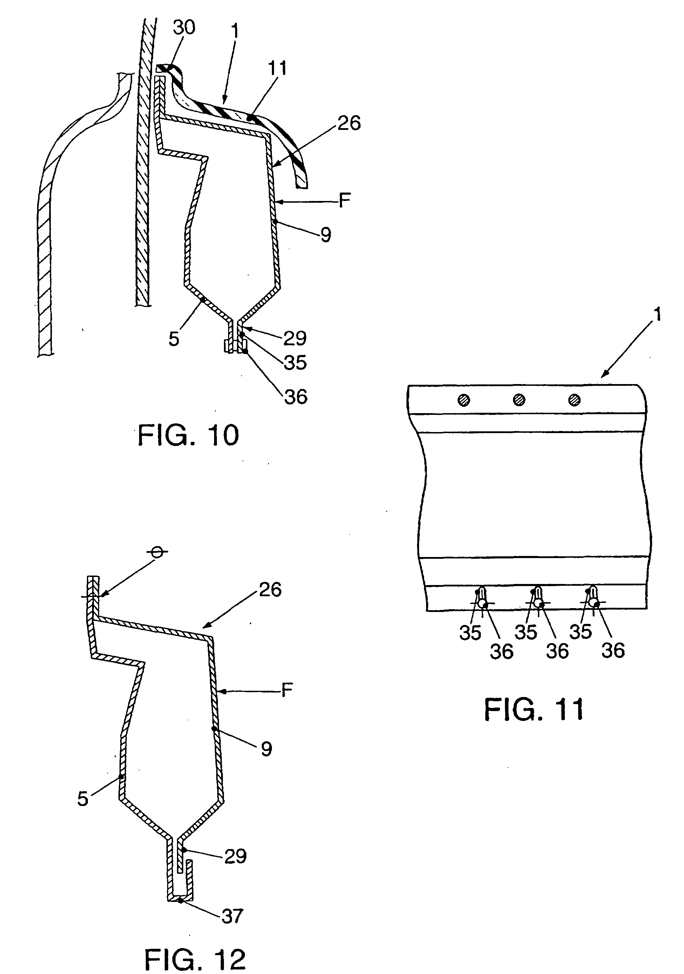

Ergänzend zu den bereits beschriebenen Konstruktionen kann gemäß den Figuren 10 bis 12 dafür gesorgt werden, daß ein im wesentlichen durch Schalenbauweise hergestelltes Trägerelement 1 eine Energieabsorption auf die Weise gewährleistet, daß das an sich geschlossene Profil im Bereich eines von Befestigungsflanschen gebildeten Halteabschnittes energieverzehrend nachgiebig ausgeführt ist. Figur 9 zeigt diesbezüglich einen konventionell ausgeführten Schalenkörper 26, der im Bereich des Halteflansches 29 eine Schlitzführung 35 aufweist, die von einem an der Hinterwand 5 befestigten Gleitniet 36 durchdrungen wird. Letzterer sorgt dafür, daß bei einem Frontalaufprall oder Offsetcrash die geschlossene Struktur des Trägerelementes 1 erhalten bleibt. Beaufschlagt jedoch bei einem Seitenaufprallunfall der Fahrzeuginsasse das Trägerelement 1 mit der Aufprallkraft F, kann ab Überschreitung einer vorgegebenen Grenzkraft die Anprallwand 9 einwärts und damit der Halteflansch 29 abwärts geschoben werden. Die an der Hinterwand 5 befestigten Niete 36 wandern also innerhalb der Schlitzführungen 35 bezogen auf die in der Zeichnung dargestellten Orientierung nach oben. Von den Nieten 36 geführt wandert also das Innenblech 9 im hier interessierenden Bereich nach unten.

Die jeweils vorzugebende Grenzkraft kann durch die Anzahl der Gleitnietführungen und die Schlitzweiten im Verhältnis zum Durchmesser der Niete variiert werden. Gemäß einer besonders vorteilhaften Weiterbildung sind die Niete 36 als Aufweitkörper ausgeführt, deren Durchmesser dem Betrage nach größer ist als die Weite der Führungsschlitze 35. Durch Prägung kann dieser Halteniet gegebenenfalls integraler Bestandteil der Hinterwand 5 sein.

Bei der in Figur 12 dargestellten Konstruktion ist der Halteflansch 29 nach Art einer Haltezunge beispielsweise durch Quetschung in eine an der Hinterwand 5 angeformte Haltetasche 37 eingebracht worden. Durch Beaufschlagung der Anprallwand 9 wird der Schalenkörper 26 so deformiert, daß der Halteflansch 29 in die Haltetasche 37 energieverzehrend eindringen kann.

Auch Merkmale dieser Konstruktion sind mit Merkmalen der vorstehend ertäuterten Konstruktionen kombinierbar. So ist beispielsweise die Halterung der pralltopfartigen Einsätze 23 bis 25 in angeformten Taschen möglich.

Mit den hier vorgestellten Ausführungsbeispielen und Abwandlungen können für unterschiedlichste Belastungsanforderungen (Kompaktfahrzeuge, Großlimousinen, Leichtbaufahrzeuge, etc.) jeweils für den Fahrzeuginsassen optimale Verhältnisse eingestellt werden. Das Verletzungsrisiko für den Fahrzeuginsassen wird so auf ein Minimum reduziert.

## Patentansprüche

1. Kraftfahrzeugtür mit einem als Seitenaufprallschutz ausgeführten und sich in Fahrzeuglängsrichtung erstreckenden Trägerelement (1), das wenigstens fahrzeuginnenseitig in Fahr-zeugquerrichtung verformungsweich und im wesentlichen nach Art eines Hohlprofils gebildet ist, **dadurch gekennzeichnet, daß** innerhalb des Trägerelementes (1) zwischen einer fahrzeuginnenseitigen Anprallwand (9) und einer der Fahrzeugaußenseite zugeordneten Hinterwand (5) als Energieabsorptionselement wenigstens ein pralltopfartiger Einsatz (23 bis 25; 23', 24') vorgesehen ist.

2. Kraftfahrzeugtür nach Anspruch 1, **dadurch gekennzeichnet, daß** der wenigstens eine Einsatz als Blechschalenkörper ausgebildet ist.

3. Kraftfahrzeugtür nach Anspruch 1 oder 2, **dadurch gekennzeichnet, daß** der wenigstens eine Einsatz an der Anprallwand (9) und/oder der Hinterwand (5) durch Klebung, Schweißung oder formschlüssige Arretierung befestigt ist.

4. Kraftfahrzeugtür nach einem der Ansprüche 1 bis 3, **dadurch gekennzeichnet, daß** in Fahrzeuglängs-richtung mehrere Einsätze (23 bis 25) in oder an dem Trägerelement (1) nebeneinander angeordnet ist.

5. Kraftfahrzeugtür nach Anspruch 4, **dadurch gekennzeichnet, daß** die Einsätze (23 bis 25) unterschiedliche Kraft-Weg-Kennungen aufweisen.

6. Kraftfahrzeugtür nach Anspruch 5, **dadurch gekennzeichnet, daß** die in Fahrtrichtung des Fahrzeuges weiter vom angeordneten Einsätze eine weichere Kennung aufweisen als die weiter hinten angeordneten Einsätze.

7. Kraftfahrzeugtür nach Anspruch 4, **dadurch gekennzeichnet, daß** die Einsätze aus Blechen unterschiedlicher Blechdicke und/oder Werkstoffgüte zusammengesetzt sind.

8. Kraftfahrzeugtür nach einem der Ansprüche 1 bis 6, **dadurch gekennzeichnet, daß** mehrere Einsätze (23 bis 25) aus einer tiefziehfähigen Platine gemeinsam hergestellt sind.

9. Kraftfahrzeugtür nach Anspruch 8, **dadurch gekennzeichnet, daß** die Einsätze einen mäanderförmig verlaufenden Querschnitt aufweisen.

10. Kraftfahrzeugtür nach einem der Ansprüche 1 bis 9, **dadurch gekennzeichnet, daß** das Trägerelement (1) aus einem einen runden oder polygonartigen Querschnitt aufweisenden Rohrprofil und einer die Anprallwand (9) enthaltenden Deformationsschale (8) zusammengesetzt ist, bei dem das Rohrprofil mit wenigstens einem pralltopfartigen Einsatz (23', 24') abgestützt ist.

11. Kraftfahrzeugtür nach Anspruch 10, **dadurch gekennzeichnet, daß** das Rohrprofil aus wenigstens zwei Blechschalen (5, 7) zusammengesetzt ist.

12. Kraftfahrzeugtür nach Anspruch 10 oder 11, **dadurch gekennzeichnet, daß** die Deformations-schale (8) im Querschnitt im wesentlichen Ω-förmig ist und über nach außen abgestellte Flansche durch Schweißung oder Klebung an dem Rohrprofil (5, 7) befestigt ist.

13. Kraftfahrzeugtür nach einem der Ansprüche 10 bis 12, **dadurch gekennzeichnet, daß** das Rohrprofil durch Strangpreßprofilierung hergestellt ist.

14. Kraftfahrzeugtür nach einem der Ansprüche 10 bis 13, **dadurch gekennzeichnet, daß** die Deformationsschale (8) durch Strangpreßprofilierung hergestellt ist.

15. Kraftfahrzeugtür nach Anspruch 13, **dadurch gekennzeichnet, daß** an dem durch Strangpreßprofilierung hergestellten Rohrprofil Befestigungsflansche (19, 20) oder Befestigungsnuten angeformt oder eingeformt sind, an denen wenigstens ein der Deformationsschale (8) zugeordneter Halteflansch (21, 22) fixierbar ist.

16. Kraftfahrzeugtür nach den Ansprüchen 14 oder 15, **dadurch gekennzeichnet, daß** die Befestigungsflansche oder Befestigungsnuten einerseits und der wenigstens eine Halte-flansch andererseits ineinandersteckbar sind.

17. Kraftfahrzeugtür nach einem der Ansprüche 1 bis 9, **dadurch gekennzeichnet, daß** an dem Trägerelement (1) die Anprallwand (9) als Bestandteil eines Schalenkörpers (26) ausgebildet ist, der über wenigstens einen als Energieabsorptionselement ausgebildeten und die Schließung des Hohlprofils herbeiführenden Befestigungsab-schnitt an einer der Fahrzeugaußenseite zugeordneten Hinterwandschale (5) angebun-den ist.

18. Kraftfahrzeugtür nach Anspruch 17, **dadurch gekennzeichnet, daß** der Befestigungs-abschnitt eine dem Schalenkörper (26) oder der Hinterwandschale (5) zugeordnete und zumindest teilweise über die Länge des Trägerelementes (1) sich erstreckende Haltetasche (37) aufweist, die zur Aufnahme einer der Hinterwandschale (5) oder dem Schalenkörper (26) zugeordneten Haltezunge (29) hergerichtet ist, welche bei Beaufschlagung der Anprallwand (9) ab Überschreitung eines vorgegebenen Kraft-Niveaus energieverzehrend gegenüber Wandungen der Haltetasche (37) verschieblich ist.

19. Kraftfahrzeugtür nach Anspruch 17, **dadurch gekennzeichnet, daß** der Befestigungs-abschnitt einen dem Schalenkörper (26) oder der Hinterwandschale (5) zugeordneten Halteflansch (29) mit wenigstens einer im wesentlichen senkrecht zur Längsachse des Trägerelementes (1) verlaufenden Schlitzführung (35) aufweist, die von einem an der Hinterwandschale (5) oder dem Schalenkörper (26) zugeordneten Halte- und/oder Auf-weitkörper (36) durchdrungen ist.

20. Kraftfahrzeugtür nach Anspruch 19, **dadurch gekennzeichnet, daß** der Halteund/oder Aufweitkörper nach Art eines Haltenietes (36) gebildet ist.

21. Kraftfahrzeugtür nach Anspruch 19, **dadurch gekennzeichnet, daß** der Halteund/oder Aufweitkörper integraler Bestandteil der Hinterwandschale (5) ist.

22. Kraftfahrzeugtür nach einem der Ansprüche 17 bis 21, **dadurch gekennzeichnet, daß** die pralltopfartigen Einsätze (23 bis 25) in den angeformten Taschen gehalten sind.

## Claims

1. Motor vehicle door having a support element (1) which is designed as a side impact protection means, extends in the longitudinal direction of the vehicle, is deformable in the transverse direction of the vehicle, at least on the inside of the vehicle, and is formed essentially in the manner of a hollow profile, **characterized in that** at least one insert (23 to 25; 23', 24') in the form of an impact pot is provided as an energy absorption element within the support element (1) between an impact wall (9) on the inside of the vehicle and a rear wall (5) assigned to the outside of the vehicle.

2. Motor vehicle door according to Claim 1, **characterized in that** the at least one insert is designed as a sheet-metal shell body.

3. Motor vehicle door according to Claim 1 or 2, **characterized in that** the at least one insert is fastened to the impact wall (9) and/or to the rear wall (5) by bonding, welding or form-fitting locking.

4. Motor vehicle door according to one of Claims 1 to 3, **characterized in that** a plurality of inserts (23 to 25) are arranged next to one another in the longitudinal direction of the vehicle in or on the support element (1).

5. Motor vehicle door according to Claim 4, **characterized in that** the inserts (23 to 25) have different force-displacement characteristics.

6. Motor vehicle door according to Claim 5, **characterized in that** the inserts arranged further to the front in the direction of travel of the vehicle have a softer characteristic than the inserts arranged further to the rear.

7. Motor vehicle door according to Claim 4, **characterized in that** the inserts are composed of sheets of different sheet-metal thickness and/or material quality.

8. Motor vehicle door according to one of Claims 1 to 6, **characterized in that** a plurality of inserts (23 to 25) are produced together from a deep-drawable blank.

9. Motor vehicle door according to Claim 8, **characterized in that** the inserts have a meandering cross section.

10. Motor vehicle door according to one of Claims 1 to 9, **characterized in that** the support element (1) is composed of a tubular profile having a round or polygonal cross section and of a deformation shell (8) containing the impact wall (9), with the tubular profile being supported by at least one insert (23', 24') in the form of an impact pot.

11. Motor vehicle door according to Claim 10, **characterized in that** the tubular profile is composed of at least two sheet-metal shells (5, 7).

12. Motor vehicle door according to Claim 10 or 11, **characterized in that** the deformation shell (8) is essentially Ω-shaped in cross section and is fastened via outwardly set flanges to the tubular profile (5, 7) by welding or bonding.

13. Motor vehicle door according to one of Claims 10 to 12, **characterized in that** the tubular profile is produced by extrusion.

14. Motor vehicle door according to one of Claims 10 to 13, **characterized in that** the deformation shell (8) is produced by extrusion.

15. Motor vehicle door according to Claim 13, **characterized in that** fastening flanges (19, 20) or fastening grooves are integrally formed on or in the tubular profile produced by extrusion and can be used to fix at least one retaining flange (21, 22) assigned to the deformation shell (8).

16. Motor vehicle door according to Claims 14 or 15, **characterized in that** the fastening flanges or fastening grooves, on the one hand, and the at least one retaining flange, on the other hand, can be inserted into one another.

17. Motor vehicle door according to one of Claims 1 to 9, **characterized in that** the impact wall (9) is formed on the support element (1) as part of a shell body (26) which is connected via at least one fastening section, which is designed as an energy absorption element and brings about the closing of the hollow profile, to a rear wall shell (5) assigned to the outside of the vehicle.

18. Motor vehicle door according to Claim 17, **characterized in that** the fastening section has a retaining pocket (37) which is assigned to the shell body (26) or the rear wall shell (5), extends at least partially over the length of the support element (1) and is set up to receive a retaining tongue (29) which is assigned to the rear wall shell (5) or the shell body (26) and, if a predetermined force level is exceeded when the impact wall (9) is struck, can be displaced relative to walls of the retaining pocket (37) in an energy-consuming manner.

19. Motor vehicle door according to Claim 17, **characterized in that** the fastening section has a retaining flange (29) which is assigned to the shell body (26) or to the rear wall shell (5) and has at least one slotted guide (35) which runs essentially perpendicular with respect to the longitudinal axis of the support element (1) and is penetrated by a retaining and/or expanding body (36) assigned to the rear wall shell (5) or to the shell body (26).

20. Motor vehicle door according to Claim 19, **characterized in that** the retaining and/or expanding body is formed in the manner of a retaining rivet (36).

21. Motor vehicle door according to Claim 19, **characterized in that** the retaining and/or expanding body is an integral part of the rear wall shell (5).

22. Motor vehicle door according to one of Claims 17 to 21, **characterized in that** the inserts (23 to 25) which are in the form of an impact pot are retained in the pockets integrally formed on the door.

## Revendications

1. Portière de véhicule automobile comportant un élément à poutrelle (1) exécuté en tant que protection contre les chocs latéraux et s'étendant dans le sens longitudinal du véhicule, ledit élément à poutrelle étant conformé de façon à résister faiblement à la déformation au moins du côté intérieur du véhicule dans le sens transversal du véhicule et essentiellement en tant que profilé creux, **caractérisée en ce qu'**au moins un insert de type pot antichoc (23 à 25 ; 23', 24') est prévu à l'intérieur de l'élément à poutrelle (1) entre une paroi à choc (9) située du côté intérieur du véhicule et une paroi arrière (5) associée au côté extérieur du véhicule, en tant qu'élément absorbeur d'énergie.

2. Portière de véhicule automobile selon la revendication 1, **caractérisée en ce que** ledit au moins un insert est conformé en tant que corps à coquille de tôle.

3. Portière de véhicule automobile selon la revendication 1 ou 2, **caractérisée en ce que** ledit au moins un insert est fixé contre la paroi à choc (9) et/ou contre la paroi arrière (5) par collage, soudage ou blocage par fermeture géométrique.

4. Portière de véhicule automobile selon l'une quelconque des revendications 1 à 3, **caractérisée en ce que** plusieurs inserts (23 à 25) sont juxtaposés les uns aux autres dans ou sur l'élément à poutrelle (1) dans le sens longitudinal du véhicule.

5. Portière de véhicule automobile selon la revendication 4, **caractérisée en ce que** les inserts (23 à 25) présentent des courbes caractéristiques force-course différentes.

6. Portière de véhicule automobile selon la revendication 5, **caractérisée en ce que** les inserts disposés plus en avant dans le sens du déplacement du véhicule présentent une courbe caractéristique plus douce que les inserts disposés plus en arrière.

7. Portière de véhicule automobile selon la revendication 4, **caractérisée en ce que** les inserts sont constitués de tôles d'épaisseur différente ou de qualité de matière différente.

8. Portière de véhicule automobile selon l'une quelconque des revendications 1 à 6, **caractérisée en ce que** plusieurs inserts (23 à 25) sont fabriqués ensemble à partir d'un flan emboutissable.

9. Portière de véhicule automobile selon la revendication 8, **caractérisée en ce que** les inserts présentent une section transversale s'étendant en forme de méandre.

10. Portière de véhicule automobile selon l'une quelconque des revendications 1 à 9, **caractérisée en ce que** l'élément à poutrelle (1) est composé d'un profilé tubulaire présentant une section transversale ronde ou polygonale et d'une coquille de déformation (8) contenant la paroi à choc (9), élément à poutrelle dans lequel le profilé tubulaire est soutenu par au moins un insert de type pot antichoc (23', 24').

11. Portière de véhicule automobile selon la revendication 10, **caractérisée en ce que** le profilé tubulaire est composé d'au moins deux coquilles de tôle (5, 7).

12. Portière de véhicule automobile selon la revendication 10 ou 11, **caractérisée en ce que** la coquille de déformation (8) présente une section transversale essentiellement en forme d'Ω et est fixée par l'intermédiaire de rebords disposés vers l'extérieur, par soudage ou collage sur le profilé tubulaire (5, 7).

13. Portière de véhicule automobile selon l'une quelconque des revendications 10 à 12, **caractérisée en ce que** le profilé tubulaire est fabriqué par profilage par extrusion.

14. Portière de véhicule automobile selon l'une quelconque des revendications 10 à 13, **caractérisée en ce que** la coquille de déformation (8) est fabriquée par profilage par extrusion.

15. Portière de véhicule automobile selon la revendication 13, **caractérisée en ce que** des rebords de fixation (19, 20) ou des rainures de fixation sont façonnés (façonnées) sur ou dans le profilé tubulaire fabriqué par profilage par extrusion, auxquels (auxquelles) au moins un rebord de maintien (21, 22) associé à la coquille de déformation (8) peut être fixé.

16. Portière de véhicule automobile selon les revendications 14 ou 15, **caractérisée en ce que** les rebords de fixation ou les rainures de fixation d'une part et ledit au moins un rebord de maintien d'autre part peuvent s'emboîter.

17. Portière de véhicule automobile selon l'une quelconque des revendications 1 à 9, **caractérisée en ce que** la paroi à choc (9) est conformée sur l'élément à poutrelle (1) comme partie constituante d'un corps à coquille (26) qui est fixé par l'intermédiaire d'au moins un segment de fixation conformé en tant qu'élément absorbeur d'énergie et réalisant la fermeture du profilé creux, sur une coquille de paroi arrière (5) associée au côté extérieur du véhicule.

18. Portière de véhicule automobile selon la revendication 17, **caractérisée en ce que** le segment de fixation présente une poche de maintien (37) s'étendant au moins partiellement sur la longueur de l'élément à poutrelle (1) et associée au corps à coquille (26) ou à la coquille de paroi arrière (5), laquelle poche est ménagée pour recevoir une languette de maintien (29) associée à la coquille de paroi arrière (5) ou au corps à coquille (26), ladite languette de maintien pouvant être déplacée par rapport aux parois de la poche de maintien (37) en absorbant de l'énergie en cas de sollicitation de la paroi à choc (9) à partir du dépassement d'un niveau de force prédéterminé.

19. Portière de véhicule automobile selon la revendication 17, **caractérisée en ce que** le segment de fixation présente un rebord de maintien (29) associé au corps à coquille (26) ou à la coquille de paroi arrière (5) et comportant au moins un guidage à fente (35) s'étendant essentiellement perpendiculairement à l'axe longitudinal de l'élément à poutrelle (1) et traversé par un corps de maintien et/ou d'élargissement (36) associé à la coquille de paroi arrière (5) ou au corps à coquille (26).

20. Portière de véhicule automobile selon la revendication 19, **caractérisée en ce que** le corps de maintien et/ou d'élargissement est conformé comme un rivet de maintien (36).

21. Portière de véhicule automobile selon la revendication 19, **caractérisée en ce que** le corps de maintien et/ou d'élargissement est une partie constituante intégrale de la coquille de paroi arrière (5).

22. Portière de véhicule automobile selon l'une quelconque des revendications 17 à 21, **caractérisée en ce que** les inserts de type pot antichoc (23 à 25) sont maintenus dans les poches façonnées.
